Europäisches Patentamt

European Patent Office

Office européen des brevets

(19)

(11) Publication number: **0 101 128**

**A1**

(12) # EUROPEAN PATENT APPLICATION

(21) Application number: **83201158.9**

(22) Date of filing: **03.08.83**

(51) Int. Cl.³: **F 15 B 15/14**
**F 16 J 10/02**

(30) Priority: **04.08.82 US 405186**

(43) Date of publication of application:
**22.02.84 Bulletin 84/8**

(84) Designated Contracting States:
**DE FR GB IT NL SE**

(71) Applicant: **Applied Power Inc.**
**250 Executive Drive**
**Brookfield Wisconsin 53005(US)**

(72) Inventor: **Fun, Johannes Krijn**
**De Goorn 4**
**Delden(NL)**

(74) Representative: **Boelsma, Gerben Harm, Ir. et al,**
**Octrooibureau Polak & Charlouis Laan Copes van**
**Cattenburch 80**
**NL-2585 GD Den Haag(NL)**

(54) A fluid cylinder having two internal cross-sections.

(57) Disclosed is a fluid cylinder in which the cylinder tube 14 has two internal cross-sections, a first cross-section "A" which receives the piston 10 and a second cross-section "B" which receives the piston rod 12 in guiding relationship.

FIG I

EP 0 101 128 A1

Croydon Printing Company Ltd.

A fluid cylinder having two internal cross-sections.

This invention relates to fluid cylinders. In particular, it relates to a fluid cylinder in which the cylinder tube has two internal cross-sections, a first cross-section which receives the piston and a second cross-section which receives the piston rod in guiding relationship.

In conventional fluid cylinders, the cylinder tube has a single, uniform cross-section which receives the piston, usually in sealing engagement. An end cap is attached to both ends of the cylinder tube. The end caps have two functions: they guide and steady the piston rod, and they hold packing, usually consisting of an O-ring and a wiper, in sealing engagement with the piston rod to prevent loss of working fluid. These two functions, while related, are not identical, and it requires careful design, manufacture and assembly of the cylinder tube and the end cap to ensure that the end cap will perform both functions satisfactorily.

It is the general object of the invention to provide a fluid cylinder which separates the guiding and stabilizing function conventionally entrusted to the end cap from the sealing function.

It is a particular object of the invention to provide a fluid cylinder in which the cylinder tube itself performs the piston rod guiding and stabilizing function.

Other objects and advantages of the present invention will become apparent from the detailed description of a preferred embodiment thereof given hereinafter.

The invention is a fluid cylinder in which the cylinder tube has two internal cross-sections, a first cross-section which receives the piston and a second cross-section which receives the piston rod in guiding relationship.

Figure 1 is a cross-sectional view of the presently preferred embodiment of the invention.

Figure 2 is a fragmentary, enlarged cross-sectional view of a portion of the presently preferred embodiment of the invention.

The drawings illustrate a fluid cylinder having a piston 10, a piston rod 12 operatively connected to the piston 10, and a cylinder tube 14, which receives both the piston 10 and the piston rod 12. The cylinder tube 14 has two internal cross-sections, a first cross-section "A" intermediate the ends of the cylinder tube 14 and a second cross-section "B", adjacent at least one of the ends of the cylinder tube 14. In the illustrated embodiment, the first cross-section "A" receives the piston 10 in sealing relationship, but there may be space for passage of fluid around the piston insofar as the present invention is concerned. The important point is that the second cross-section "B" receives the piston rod 12 in guiding relationship. That is, the second cross-section "B" serves as a bearing surface for the piston rod 12.

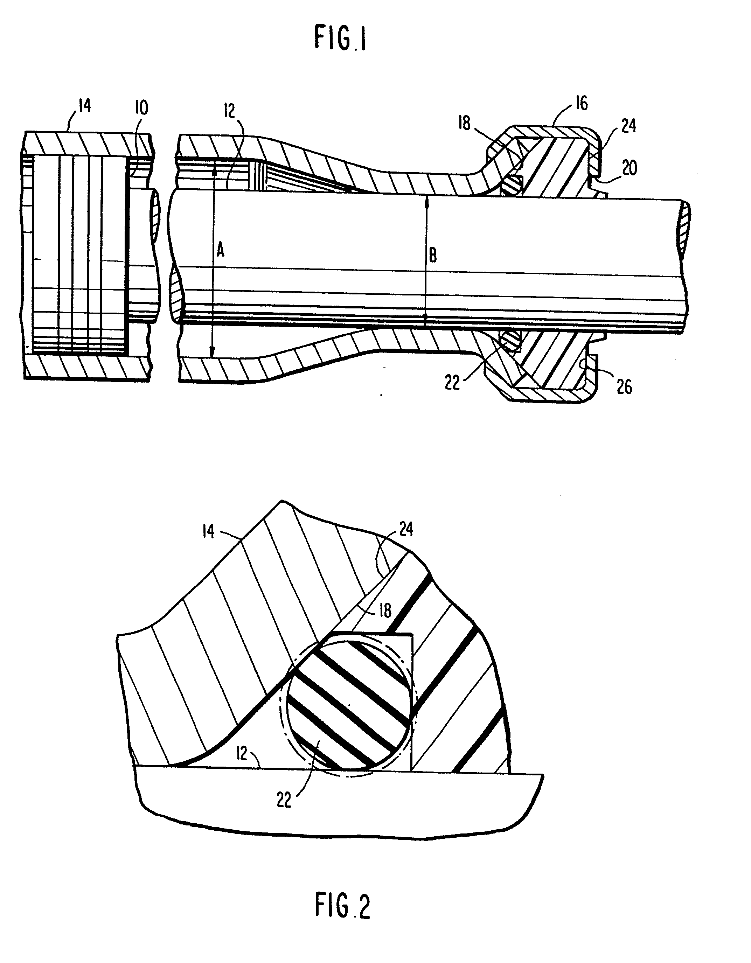

The cylinder tube 14 flares radially outwardly from the second cross-section "B" towards the end of the cylinder tube 14, and an end cap 16 is received over the flared end 18 of the cylinder tube 14. The end cap 16 has a rod exit hole 20 which receives the piston rod 12 with substantial clearance. Thus, it should be noted that the end cap 16 does not touch the piston rod 12 and therefore serves no rod guiding an O-ring 22 and a wiper 24, and the end cap 16 is sized and shaped so that the O-ring 22 and the wiper 24 are held in sealing engagement with the piston rod 12. In particular, the axial dimension between the flared end 18 of the cylinder tube 14 and the inner surface 26 of the end cap 16 is slightly less than the unrestrained axial dimension of the O-ring 22 and the wiper 24. Accordingly, the O-ring is distorted into close engagement with the piston rod 12, when the end cap 16 is placed over the flared end 18, as illustrated in figure 2.

Preferably the cylinder tube 14 and the end cap 12 are both made of metal, and the described shape of the cylinder tube 14 is achieved by cold forming.

While the present invention has been illustrated by a detailed description of a preferred embodiment thereof, it will be obvious to those skilled in the art that various changes in

./3

0101128

form and detail can be made therein without departing from the
true scope of the invention. For that reason, the invention must
be measured by the claims appended hereto and not by the foregoing
preferred embodiment.

---------

CLAIMS

1. A fluid cylinder comprising:

   (a) a piston;

   (b) a piston rod operatively connected to said piston; and

   (c) a cylinder tube, said cylinder tube having two internal cross-sections, a first cross-section intermediate the ends of said cylinder tube which receives said piston and a second cross-section adjacent one of the ends of said cylinder tube, which receives said piston rod in guiding relationship.

2. A fluid cylinder as recited in claim 1, wherein the first cross-section of said cylinder tube receives said piston in guiding relationship.

3. A fluid cylinder as recited in claim 1, wherein said cylinder tube is flared radially outwardly from the second cross-section towards the end of said cylinder tube.

4. A fluid cylinder as recited in claim 3 and further comprising an end cap received over de flared end of said cylinder tube and over said piston rod.

5. A fluid cylinder as recited in claim 4 and further comprising an O-ring and a wiper held in sealing engagement with said piston rod by the flared end of said cylinder tube and said end cap.

6. A fluid cylinder comprising:

   (a) a piston;

   (b) a piston rod operatively connected to said piston; and

   (c) a cylinder tube which receives said piston and said piston rod,

   the improvement wherein said cylinder tube has two internal cross-sections, a first cross-section intermediate the ends of said cylinder tube which receives said piston and a second cross-section adjacent one of the ends of said cylinder tube which receives said piston rod in guiding relationship.

7. In a fluid cylinder as recited in claim 6, the further improvement wherein the first cross-section of said cylinder tube receives said piston in sealing relationship.

8. In a fluid cylinder as recited in claim 6, the further improvement wherein said cylinder tube is flared radially outwardly from the second cross-section towards the end of said cylinder tube.

9. In a fluid cylinder as receited in claim 8, the further improvement comprising an end cap received over the flared end of said cylinder tube and over said piston rod.

10. In a fluid cylinder as recited in claim 9, the further improvement comprising an O-ring and a wiper held in sealing engagement with said piston rod by the flared end of said cylinder tube and said end cap.

---------

## FIG.1

## FIG.2

**European Patent Office**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | FR-A-1 505 033 (BOSCH) <br><br> * Whole document * <br><br> --- | 1,2,5, 6,10 | F 15 B 15/14 <br> F 16 J 10/02 |
| X | FR-A- 931 383 (SMITH) <br><br> * Whole document * <br><br> --- | 1-4,6- 9 | |
| A | US-A-2 448 266 (KASER) <br><br> * Whole document * <br><br> ----- | 3,4,7, 8 | |

**TECHNICAL FIELDS SEARCHED (Int. Cl. ³)**

F 15 B
F 16 J

The present search report has been drawn up for all claims

| Place of search | Date of completion of the search | Examiner |
|---|---|---|
| THE HAGUE | 13-09-1983 | KNOPS J. |